# EUROPEAN PATENT SPECIFICATION

(11) **EP 0 369 076 B1**
(45) Date of publication and mention of the grant of the patent: **17.01.1996**
(21) Application number: 88310793.0
(22) Date of filing: 16.11.1988
(51) Int. Cl.: C07F 9/38

(54) **Process for preparation of trisubstituted sulfonium and sulfoxonium salts of N-phosphonomethylglycine**
Verfahren zur Herstellung von trisubstituierten Sulfonium- und Sulfoxoniumsalzen des N-phosphonomethylglyzins
Procédé pour la préparation de sels de sulfonium et sulfoxonium trisubstitués de la N-phosphonométhylglycine

(43) Date of publication of application: 23.05.1990
(73) Proprietor: ZENECA INC., Wilmington, Delaware 19897 (US)
(72) Inventor: Gaughan, Edmund J., Berkeley California 94708 (US); Heather, James Brian, Hercules California 94547 (US); Milhailovski, Alexander, Kensington California 94707 (US)
(74) Representative: Ricks, Michael James

(56) References cited:
- EP-A- 0 131 354
- WO-A-83/03608
- US-A- 4 315 765
- THE JOURNAL OF ORGANIC CHEMISTRY, vol. 43, no. 8, 14th April 1978, pages 1593-
- 1595, American Chemical Society; K. YAMAUCHI et al.: "Methylation of pyrimidines, the corresponding nucleosides, and inosine with trimethyloxosulfonium hydroxide"
- Houben-Weyl,"Organische Schwefelverbindungen" Band E11, Teil 2, page 1416

## Description

### Background of the Invention

The compound N-phosphonomethylglycine, an acid, and agriculturally effective salts thereof are widely used as herbicides for post-emergent treatment of noxious weeds and grasses. Post-emergent herbicides are conventionally applied to plant surfaces after emergence of the weeds or other unwanted plants from the soil.

In field use, the herbicide is normally applied in amounts of from 0.01 to about 20 pounds per acre, preferably from 2 to 6 pounds per acre.

### The Prior Art

The N-phosphonomethylglycines, and certain soluble salts thereof, can be made in a number of different ways. One such method, as described in U.S. Patent 3,160,632 (Toy et al., December 8, 1964) is to react N-phosphinomethylglycine (glycinemethylenephosphinic acid) with mercuric chloride in a water solvent at reflux temperature, and subsequently separating the reaction products. Another method is the reaction of ethyl glycinate with formaldehyde and diethylphosphite. The latter method is described in U.S. Patent No. 3,799,758 (Franz, March 26, 1974). In addition, there is a whole series of patents, relating to N-phosphonomethylglycines, their salts, and derivatives thereof, described as being useful herbicides and plant growth regulators. Such additional patents relating to the N-phosphonomethylglycines, methods of application, methods of preparation, salts, and derivatives, include U.S. Patent 3,868,407, U.S. Patent 4,197,254, and U.S. Patent 4,199,354, among others.

The presently used commercial compound is the isopropylamine salt of N-phosphonomethylglycine and derivatives thereof. It has been discovered, however, that other salts of N-phosphonomethylglycine are more effective for the herbicidal purposes than the isopropylamine salt and these salts are the trialkylsulfonium and trialkylsulfoxonium salts of N-phosphonomethylglycine. In the past, the salts have been made by reacting N-phosphonomethylglycine with silver oxide to form the silver salt or with sodium hydroxide to form the sodium salt, and treating either of these salts with a trialkyl sulfonium or sulfoxonium halide, as described in US Patent No. 4,315,765, Large.

A new method of making these salts has now been discovered which gives high yields and generates herbicidal compounds in greater purity then any other previously known method.

### Description of the Invention

It has now been discovered that the trisubstituted sulfonium and trisubstituted sulfoxonium salts of N-phosphonomethylglycine can be prepared by the steps of (a) reacting a trisubstituted sulfonium hydroxide selected from the group consisting of trimethylsulfonium hydroxide, triethylsulfonium hydroxide, tributylsulfonium hydroxide, and triisobutysulfonium hydroxide or a trisubstituted sulfoxonium hydroxide selected from the group consisting of trimethylsulfoxonium hydroxide, triethylsulfoxonium hydroxide, tributylsulfoxonium hydroxide, and triisobutysulfoxonium hydroxide with N-phosphonomethylglycine in a reaction vessel; and (b) allowing said reaction to proceed at a sufficient temperature and for a sufficient period of time to cause completion of the reaction, thereby forming the trisubstituted sulfonium or trisubstituted sulfoxonium salts of N-phosphonomethylglycine.

The preferred hydroxides for use in the practice of the invention are trimethylsulfonium hydroxide and trimethyl sulfoxonium hydroxide.

During the course of the reaction, heat is evolved. The heat can be removed by any suitable means, but desirably is removed by external cooling of the reaction vessel. The temperature of the reaction is not critical but is preferably maintained at between about 5 to about 40°C in order to achieve good yields, and minimuze side reactions.

The invention will be better understood with reference to the specific examples which follow, which serve to illustrate the instant invention.

### EXAMPLE 1

### Preparation of Trimethylsulfoxonium Salt of N-Phosphonomethylglycine

Trimethylsulfoxonium hydroxide (0.05 mole) in 100 milliliters (1) of water was prepared by conventional means (see for instance, K. manchi et al., J. Org. Chem., 43, 1593 (1978)) and added to N-phosphonomethyglycine (8.46g, 0.05 mole). The mixture was stirred in an ice bath for about 40 minutes, during which time the N-phosphonomethylglycine went into solution.

The water was removed in vacuo up to 50°C, yielding 11.0g (84.2%) of product. A weight percent assay for N-phosphonomethylglycine anion by HPLC (high pressure liquid chromatography) indicated that the product was essentially pure trimethylsulfoxonium salt of N-phosphonomethylglycine. Its structure was confirmed by nuclear magnetic resonance.

### EXAMPLE 2

### Preparation of Trimethylsulfonium Salt of N-Phosphonomethylglycine

Trimethylsulfonium hydroxide (245g) in water (6.78 1) was slowly added to a slurry of N-phosphonomethylglycine (634g) in water (1 1). The resulting solution was concentrated under reduced pressure to 1600g of a clear solution which was assayed by conventional methods to be 56% by weight trimethylsulfonium salt of N-phosphonomethylglycine and 44% water.

Trialkylsulfonium hydroxides which can be used as starting materials in the process of the instant invention, include, in addition to trimethylsulfonium hydroxide, triethylsulfonium hydroxide, tributylsulfonium hydroxide and triisobutylsulfonium hydroxide.

These compounds can be made by reacting an appropriate trialkylsulfonium or sulfoxonium halide with silver oxide, and separating the action products.

N-Phosphonomethylglycine is a commercially available material known by the name "glyphosate". It can be prepared as described in US Patent No., 3,799,758, Franz.

In the process of the invention, it is preferred that the ratio of sulfonium or sulfoxonium hydroxide to N-phosphonomethylglycine be about 1:1. Substantial deviation from this ratio results in either incomplete salt formation or the formation of higher salts of N-phosphonomethylglycine.

## Claims

1. A method for the preparation of sulfur-containing salts of N-phosphonomethylglycine which comprises the steps of (a) reacting a trisubstituted sulfonium hydroxide selected from the group consisting of trimethylsulfonium hydroxide, triethylsulfonium hydroxide, tributylsulfonium hydroxide, and triisobutysulfonium hydroxide or a trisubstituted sulfoxonium hydroxide selected from the group consisting of trimethylsulfoxonium hydroxide, triethylsulfoxonium hydroxide, tributylsulfoxonium hydroxide, and triisobutysulfoxonium hydroxide with N-phosphonomethylglycine in a reaction vessel; and (b) allowing said reaction to proceed at a sufficient temperature and for a sufficient period of time to cause completion of the reaction, thereby forming the trisubstituted sulfonium or trisubstituted sulfoxonium salts of N-phosphonomethylglycine.

2. The method of Claim 1 in which the reaction is conducted at a temperature ranging from about 5 to about 40°C.

3. The method of Claim 1 in which the mole ration of sulfonium or sulfoxonium hydroxide to N-phosphonomethylglycine is about 1:1.

4. The method of Claim 1 in which the reaction is conducted in an inert solvent medium wherein the solvent is selected from the group consisting of water, methanol and ethanol.

5. The method of Claim 1 in which the trisubstituted sulfonium hydroxide is trimethylsulfonium hydroxide.

6. The method of Claim 1 in which the trisubstituted sulfoxonium hydroxide is trimethylsulfoxonium hydroxide.

## Patentansprüche

1. Verfahren zur Herstellung von schwefelhaltigen Salzen von N-Phosphonomethylglycin, bei dem (a) ein trisubstituiertes Sulfoniumhydroxid, das unter Trimethylsulfoniumhydroxid, Triethylsulfoniumhydroxid, Tributylsulfoniumhydroxid und Triisobutylsulfoniumhydroxid ausgewählt ist, oder ein trisubstituiertes Sulfoxoniumhydroxid, das unter Trimethylsulfoxoniumhydroxid, Triethylsulfoxoniumhydroxid, Tributylsulfoxoniumhydroxid und Triisobutylsulfoxoniumhydroxid ausgewählt ist, mit N-Phosphonomethylglycin in einem Reaktionsgefäß umgesetzt wird und (b) die Umsetzung während eines ausreichend langen Zeitraumes bei einer ausreichenden Temperatur bis zur vollständigen Umsetzung fortschreiten gelassen wird, wodurch die trisubstituierten Sulfonium- oder trisubstituierten Sulfoxonium-Salze von N-Phosphonomethylglycin gebildet werden.

2. Verfahren nach Anspruch 1, wobei die Umsetzung bei einer Temperatur im Bereich von etwa 5 bis etwa 40°C durchgeführt wird.

3. Verfahren nach Anspruch 1, wobei das Molverhältnis des Sulfonium- oder Sulfoxoniumhydroxids zum N-Phosphonomethylglycin etwa 1:1 beträgt.

4. Verfahren nach Anspruch 1, bei dem die Umsetzung in einem inerten Lösungsmittelmedium durchgeführt wird, wobei das Lösungsmittel unter Wasser, Methanol und Ethanol ausgewählt ist.

5. Verfahren nach Anspruch 1, wobei das trisubstituierte Sulfoniumhydroxid Trimethylsulfoniumhydroxid ist.

6. Verfahren nach Anspruch 1, wobei das trisubstituierte Sulfoxoniumhydroxid Trimethylsulfoxoniumhydroxid ist.

## Revendications

1. Procédé de production de sels contenant du soufre de N-phosphonométhylglycine, qui comprend les étapes consistant (a) à faire réagir un hydroxyde de sulfonium trisubstitué choisi dans le groupe consistant en l'hydroxyde de triméthylsulfonium, l'hydroxyde de triéthylsulfonium, l'hydroxyde de tributylsulfonium et l'hydroxyde de triisobutylsulfonium ou un hydroxyde de sulfoxonium trisubstitué choisi dans le groupe constitué de l'hydroxyde de triméthylsulfoxonium, de l'hydroxyde de triéthylsulfoxonium, de l'hydroxyde de tributylsulfoxonium et de l'hydroxyde de triisobutylsulfoxonium avec la phosphonométhylglycine dans un récipient de réaction ; et (b) à laisser cette réaction se poursuivre à une température suffisante et pendant une durée suffisante pour qu'elle aille jusqu'à son stade final, en formant ainsi les sels de sulfonium trisubstitué ou de sulfoxonium trisubstitué de la N-phosphonométhylglycine.

2. Procédé suivant la revendication 1, dans lequel la réaction est conduite à une température allant d'environ 5 à environ 40°C.

3. Procédé suivant la revendication 1, dans lequel le rapport molaire de l'hydroxyde de sulfonium ou de sulfoxonium à la N-phosphonométhylglycine est d'environ 1:1.

4. Procédé suivant la revendication 1, dans lequel la réaction est conduite dans un solvant inerte choisi dans le groupe consistant en l'eau, le méthanol et l'éthanol.

5. Procédé suivant la revendication 1, dans lequel l'hydroxyde de sulfonium trisubstitué est l'hydroxyde de triméthylsulfonium.

6. Procédé suivant la revendication 1, dans lequel l'hydroxyde de sulfoxonium trisubstitué est l'hydroxyde de triméthylsulfoxonium.
